# EUROPEAN PATENT SPECIFICATION

(11) **EP 2 103 875 B1**
(45) Date of publication and mention of the grant of the patent: **19.09.2018**
(21) Application number: 08005139.4
(22) Date of filing: 19.03.2008
(51) Int. Cl.: F23L 11/00, F23L 13/02, F24H 8/00

(54) **NON-RETURN VALVE FOR AN EXHAUST DUCT OF FLUE GASES OF A BOILER**
RÜCKSCHLAGKLAPPE FÜR EINEN ABGASKANAL VON RAUCHGASEN EINES KESSELS
SOUPAPE DE NON RETOUR POUR CONDUIT D'ÉCHAPPEMENT DE FUMÉES DE CHAUDIÈRE

(43) Date of publication of application: 23.09.2009
(73) Proprietor: Almeva AG, 9220 Bischofszell (CH)
(72) Inventor: Rossetti, Marco, 20128 Milano (IT)
(74) Representative: Porta, Checcacci & Associati S.p.A

(56) References cited:
- EP-A- 1 826 487
- WO-A1-2007/135744
- CN-Y- 200 975 524
- DE-A1- 19 606 403
- DE-B3- 10 245 403
- DE-C1- 19 906 736
- DE-U1- 8 523 605
- US-A- 1 743 731
- US-A- 3 888 166
- US-A- 4 079 751
- US-A- 4 146 048
- US-A- 4 269 166
- US-A- 4 509 499
- US-A- 5 711 343

## Description

The present invention regards a non-return valve for a exhaust duct of flue gases of a boiler, preferably but not exclusively a condensing boiler.

Non-return valves according to the invention are preferably used in respective exhaust ducts of flue gases of a plurality of condensing boilers arranged in cascade, the respective exhaust ducts being connected to a single main exhaust manifold of flue gases, in turn connected to a chimney.

Furthermore, the present invention regards a assembly of non-return valve for a gas exhaust duct of flue gases of a boiler, comprising the abovementioned valve.

With the aim of introducing the prior art non-return valves for boiler, reference is made to the exemplifying case of a heat generation plant comprising a plurality of boilers arranged in cascade.

With this configuration of the plant, being the overall thermal power of the plant subdivided over the plurality of boilers, it is possible to operate only the number of boilers required to generate the thermal power needed from time to time, obtaining high efficiency at all conditions of thermal power supplied, implying a substantial reduction of the plant operating costs.

The in-a-row boilers are for example arranged side by side and the respective exhaust ducts of flue gases are vertically arranged. Such exhaust ducts are connected to a main exhaust manifold of flue gases, transversely arranged over the boilers. Alternatively, the in-a-row boilers can be arranged one over the other at different floors of a building, and they have horizontal exhaust ducts, which are connected to a common vertical chimney.

Precisely due to the fact that, generally, all the boilers are not operated simultaneously, it is necessary to prevent that the flue gases exhausted into the main manifold from the operating boilers can flow back, from the respective exhaust ducts, into the non-operating boilers, and therefrom into the environment where the boilers are installed.

For this reason, each exhaust duct is exactly provided with a non-return valve, comprising a valve body in which a passage opening of flue gases is defined, associated to the valve body being a obturator which, when the respective boiler is not operating, closes the opening.

Document DE 19906736 shows such a non-return valve, in which the obturator comprises a plate, which can move along the longitudinal axis of the valve for opening and closing the passage opening of flue gases. The plate is orthogonally arranged with respect to the abovementioned axis.

Document EP 1178262 shows a non-return valve of the abovementioned type, but in which case the obturator comprises a double plate, constituted of a first circular-shaped central plate and a second annular-shaped plate, both plates being capable of displacing along the longitudinal axis of the valve. When operating, at a determined pressure difference between upstream and downstream of the valve, the first plate rises from its seat, providing a partial opening of the valve, while when such pressure difference reaches a determined higher value, also the second plate rises from its seat, hence providing the complete opening of the valve. The first and the second plate are orthogonally arranged with respect to the abovementioned axis.

Document EP 1826487 shows a non-return-valve comprising a valve body in which is a passage opening of flue gases is defined, a swing element being associated to the valve body, said element, when the respective boiler is not operating, closing the opening. The swing element is hinged on the valve body at the passage opening of flue gases, which is orthogonally arranged with respect to the longitudinal axis of the valve body.

US5711343 describes a non return valve according to the preamble of claim 1. No matter how advantageous from various points of view, the Applicant found that non-return valves structured according to the prior art schematically described above reveal several drawbacks.

First of all, they can operate only if mounted vertically.

In addition, they have the drawback of having a considerable difference between the passage opening area of flue gases of the valve and the section of the duct in which the valve is mounted, thus causing non-negligible pressure drops.

Furthermore, the obturators of the valves according to the prior art do not completely free the passage zone of flue gases, interfering with the flow and causing high pressure drops. Particularly in the plate valves according to DE 19906736 and EP 1178262, the pressure drops are very considerable, since the largest section of the obturator is exposed to the flow.

Additionally, the valves according to the prior art are cumbersome and, in order to limit the pressure drops, they can be connected solely to exhaust ducts with a relatively large diameter, for example greater than or equal to 110 mm.

Furthermore, the Applicant found that the valves according to the prior art described above, have a relatively high "opening pressure" (which is the minimum pressure difference between upstream and downstream of the obturator required to open the obturator itself), which can cause malfunctions upon the starting and at the low power operation of the boiler.

The technical problem at the basis of the present invention is to provide a non-return valve for a exhaust duct of flue gases of a boiler capable of overcoming the abovementioned drawbacks referring to the prior art in a simple and inexpensive manner. In particular, the invention aims at providing a non-return valve with low pressure drops (that is an area of the passage opening of flue gases closest possible to the section of duct in which the valve is mounted, and a negligible hindrance of the obturators to the flow), a minimal cumbersome and which is capable of being mounted directly onto ducts having small diameter, for example 80 mm.

Therefore, the present invention regards, in a first aspect thereof, a non-return valve for a exhaust duct of flue gases of a boiler, according to the object of claim 1.

Advantageously, the abovementioned non-return valve has a quicker and more reactive operation with respect to that of the non-return valves made according to the prior art described above. Basically, this is due to the fact that each swing element to be displaced for the opening of the valve has a reduced ratio between the weight and the passage area of flue gases with respect to that of the single swing element of EP 1826487.

Furthermore, the subdivision of the obturator into two swing elements, which are hinged on the valve body at or in proximity to a middle plane of the opening, allows the total opening of the passage area of flue gases, given that the two swing elements can rotate till 90° without interfering with the internal surface of the exhaust duct. Additionally, the two swing elements, when completely open, expose their least section possible to the flow, unusually limiting the pressure drops.

In particular, the non-return valve according to the invention has lower pressure drops with respect to the ones of EP 1826487, especially in conditions of partial opening of the two swing elements. Basically, this is due to the fact that in the valve of the invention the flow of the flue gases exiting the valve body is substantially "subdivided" into two flows, one per each swing element, each swing element imparting to the respective flow of flue gases a deviation of lower value, and generally a better flow progress, with respect to the deviation imparted by the single swing element of EP 1826487. Experimental tests performed by the Applicant have confirmed what is mentioned above.

Experimental tests performed by the Applicant have further confirmed the fact that the use of a pair of hinged swing elements in the non-return valve of the invention leads to, considering exhaust ducts of the same diameter, lower pressure drops and opening pressures also with respect to the valves described in DE 19906736 e EP 1178262.

According to the invention, the passage opening of flue gases comprises two structurally distinct passage zones of flue gases, each swing element being active on a respective passage zone of flue gases.

In this manner, advantageously, the closing of the passage opening of flue gases is ensured in a constructively simple manner, by making sure that the two swing elements rest on the edges of the respective passage zones of flue gases.

In order to simplify the construction of the valve according to the invention, the two passage zones of flue gases are substantially coplanar. However, other embodiments are provided, having good operation characteristics, in which the two passage zones of flue gases are defined on two incident planes, whose angle of incidence measured downstream of the valve can be smaller or greater than 180°.

Preferably, the two passage zones of flue gases are of the same shape and size and they are symmetric with respect to the abovementioned middle plane. In this manner, the flow of the flue gases is subdivided in a substantially balanced manner, limiting the turbulences and the noise. Additionally, rationalisation of the valve manufacturing steps is obtained.

Preferably, in the latter case, also the two swing elements are of the same shape and size. In this manner the manufacturing costs are very low and a rationalisation of the valve assembly steps according to the invention and of the maintenance thereof is obtained.

Preferably, in the case where the two passage zones of flue gases are substantially coplanar, the plane to which the two zones substantially belong is inclined with respect to a longitudinal axis of the valve body.

Additionally, also in the case where the passage opening of flue gases does not define two structurally distinct passage zones of flue gases, the passage opening itself is preferably defined substantially in a plane, which is inclined with respect to a longitudinal axis of the valve body.

Through the abovementioned inclination of the plane of the two passage zones of flue gases, or respectively of the passage opening of flue gases, it is advantageously possible to use the same non-return valve, both in the case where it is arranged with the longitudinal axis in vertical (for example in the case of a plurality of boilers in cascade arranged side by side and with vertical exhaust duct), and in the case where it is arranged with the longitudinal axis in horizontal. The latter case occurs when the boilers are arranged in cascade one over the other, for example in the flats of the various floors of a civil building, where the respective exhaust ducts, which pass through the walls of the respective flats to be connected to a main vertical manifold, are arranged horizontally.

In addition, the condensate which is formed downstream of the valve of the invention, sliding over the inclined plane, does not stagnate over the swing elements, as it occurs, on the contrary, with the obturators of the valves made according to the prior art described above.

Furthermore, through the abovementioned arrangement of the two passage zones of flue gases according to a plane substantially inclined with respect to the longitudinal axis of the valve body, the surface dimension of the passage zones of the flue gases is greater with respect to the surface dimension of zones positioned on an orthogonal plane with respect to the longitudinal axis of the valve, thus the opening pressure of the swing elements is lower, substantially in an inversely proportional manner.

Preferably, the abovementioned plane to which the two passage zones of flue gases substantially belong, or respectively the abovementioned plane of the passage opening of flue gases, is inclined, with respect to the longitudinal axis of the valve body, of an angle comprised between 30° and 60°. The Applicant observed that with the abovementioned angles, non-return valves with a relatively low opening pressure are advantageously obtained.

In order to ensure a substantially identical operation of the valve according to the invention arranged with the longitudinal axis in vertical and in horizontal, the abovementioned angle preferably measures about 45°.

In a preferred embodiment of the valve of the invention, the two swing elements are hinged to the valve body with clearance. Preferably, in the case where the passage opening of flue gases comprises the abovementioned two zones, such clearance is in a parallel plane with respect to, or a coincident plane with, the one of the abovementioned two zones.

In this manner, any accumulation of soot, and dirt in general, in the hinges between the valve body and the swing elements is advantageously prevented. As a matter of fact, the abovementioned clearance allows a relative displacement between swing elements and valve body at the hinges, in such a manner to displace the possibly deposited soot.

Another preferred characteristic of the valve of the invention is that the passage opening of flue gases comprises a raised abutment edge for the two swing elements, where the two swing elements rest in the operating closing condition of the valve.

In this manner, a good seal of the swing elements on the passage opening of flue gases (that is on the two passage zones of flue gases) is advantageously ensured, in a simple and inexpensive manner. Furthermore, in the case where the two passage zones of flue gases are substantially coplanar and inclined with respect to the longitudinal axis of the valve body, such raised edge also serves to prevent the condensate from falling directly back inside the valve through the passage zones of flue gases. Furthermore, on the abovementioned raised edges it is possible to perform a mechanical flattening, in the case where improvement (or restoration, in a maintenance operation) of the seal of the swing elements on the passage opening of flue gases is required.

A further preferred characteristic of the valve of the invention, is that the valve body comprises stop means for the two swing elements, where the two swing elements go in abutment in an operating condition of maximum opening of the valve.

In this manner, the risk that the swing elements might remain "stuck" one to the other, leaving the valve open in absence of the flow of the flue gases, is advantageously prevented. Furthermore, the swing elements are prevented from hitting against each other hence leading to noise and/or damage on the same.

In case the two passage zones of flue gases are coplanar, the valve of the invention preferably comprises two hinges, one per each swing element, such two hinges being positioned side by side, the abovementioned stop means comprising a single element arranged astride the two hinges.

In this manner, the manufacturing and the maintenance of the valve of the invention is advantageously rationalised.

Still, another preferred characteristic of the valve of the invention is that the valve body has substantially tubular shape. Preferably, such valve comprises a circumferential gasket externally associated to the valve body and intended to provide seal with an internal wall of the exhaust duct of flue gases.

In this manner, the valve of the invention is easy to construct and it is particularly compact (hence being extremely suitable in the case of boilers arranged in cascade one over the other in a civil building). It is advantageously mounted directly inside the exhaust duct of flue gases, and thus does not require subdividing the exhaust duct of flue gases and connecting it to the two ends of the non-return valve, as it occurs in the prior art. The Applicant found that it is particularly advantageous to dimension the valve of the invention for being able to house it at the connection between respective male and female ends of two pipes of the exhaust duct of flue gases, in such a manner that the circumferential gasket provides a seal against the internal wall of the abovementioned female end.

Preferably, in order to facilitate proper centring of the abovementioned valve inside the exhaust duct of flue gases, the abovementioned valve body externally has a plurality of elements radially projecting from the valve body itself.

In a preferred embodiment of the valve of the invention, the valve body and the two swing elements are made of plastic material.

This is particularly advantageous especially in the case of the condensing boilers, where also the exhaust duct of flue gases is generally made of plastic material, which proved to be ideal for the low operating temperatures, and the consequent conditions of operation with dampness, of the condensing boilers.

It should be observed that the two swing elements are advantageously shaped in such a manner to allow their construction by a punching from sheet made of plastic material, instead of the more expensive injection moulding.

As a matter of fact, given that the two swing elements are hinged with clearance on the valve body (they substantially "float" on the valve body), a high dimensional accuracy is not required, hence the accuracy obtainable by punching is enough.

Alternatively, sheets made of composite material, which are punched, can be used for the swing elements.

Another preferred characteristic of the valve of the invention is the fact that the valve body comprises a condensate drainage opening.

Preferably, in the case in which the two passage zones of flue gases are coplanar and inclined with respect to the longitudinal axis of the valve body, or in the case in which the passage opening of flue gases is defined on a inclined plane with respect to the longitudinal axis of the valve body, such condensate drainage opening is arranged below with respect to the passage opening of flue gases when the valve is mounted in such a manner that the longitudinal axis is arranged in vertical.

In this manner, advantageously, the condensate slides due to gravity on the inclined top plane of the valve body, until it falls into the drainage opening. The abovementioned raised edges of the passage opening of flue gases, which prevent the condensate from entering directly inside the valve body through the opening itself, also help the above.

In its second aspect, the present invention regards a assembly of non-return valve for a exhaust duct of flue gases of a boiler, comprising a non-return valve of the abovementioned type and provided with a condensate drainage opening, and a siphon connected to the drainage opening itself. In particular, it should be observed that the siphon is used when the valve is mounted in such a manner that its longitudinal axis is arranged substantially in vertical. In the case in which the valve is mounted in such a manner that its longitudinal axis is arranged substantially in horizontal (except for a minimum inclination of about 3°, provided for preventing the condensate stagnation), the valve is not connected to the abovementioned siphon (and the abovementioned drainage opening is closed with a plug), and or a drain of the condensate is provided on the tract of the exhaust duct of flue gases arranged just downstream of the valve.

Preferably, such siphon has smaller external size with respect to the one of the valve body.

In this manner, the siphon can be advantageously housed inside the exhaust duct of flue gases, thus the valve assembly is very compact.

In order to enhance the compactness, in direction of the longitudinal axis, of the valve assembly of the invention, the siphon is at least partially housed in the valve body.

Furthermore, the siphon is preferably made of plastic material. This is advantageous especially in the case of the condensing boilers, where also the exhaust duct of flue gases is generally made of plastic material.

Further characteristics and advantages of the present invention shall be clearer from the following detailed description of one preferred embodiment thereof, made with reference to the attached drawings and given for indicative and non-limiting purposes. In such drawings:

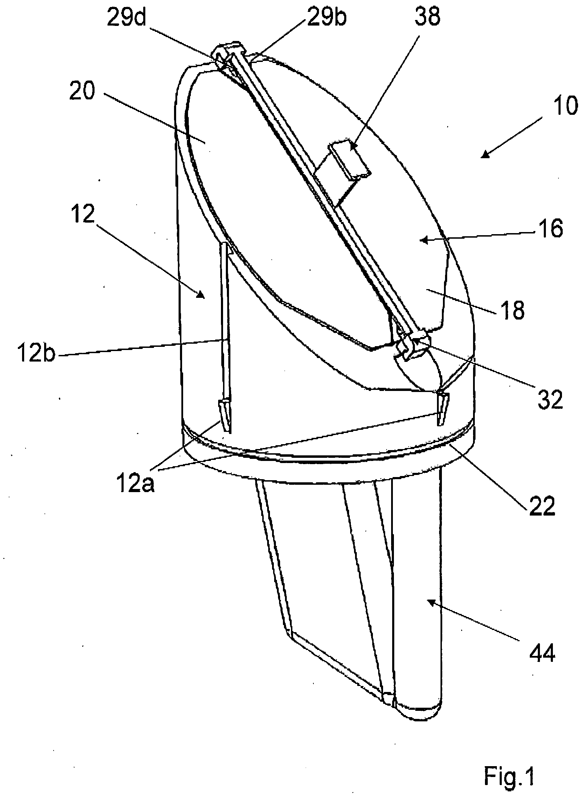

- Figure 1 schematically represents a perspective view of a non-return valve, for a exhaust duct of flue gases of a boiler, according to the present invention, in a operating condition of closed passage opening of flue gases;

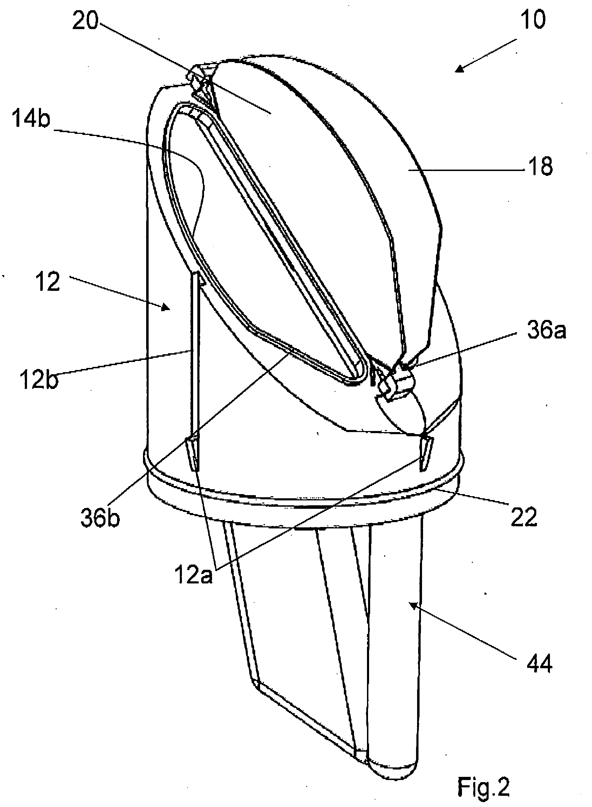

- Figure 2 schematically represents a perspective view of the valve of figure 1, in a operating condition of open passage opening of flue gases;

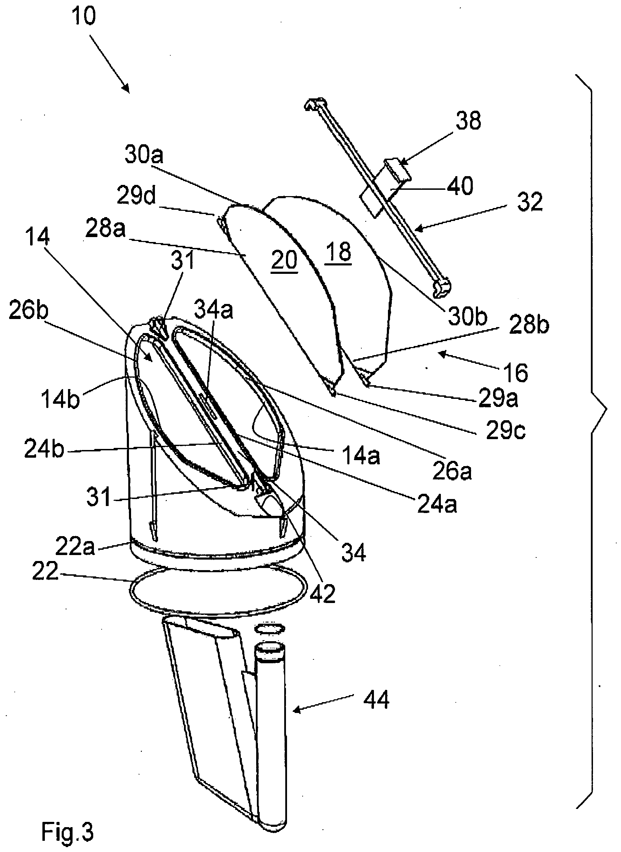

- Figure 3 schematically represents an exploded perspective view of the valve of figure 2;

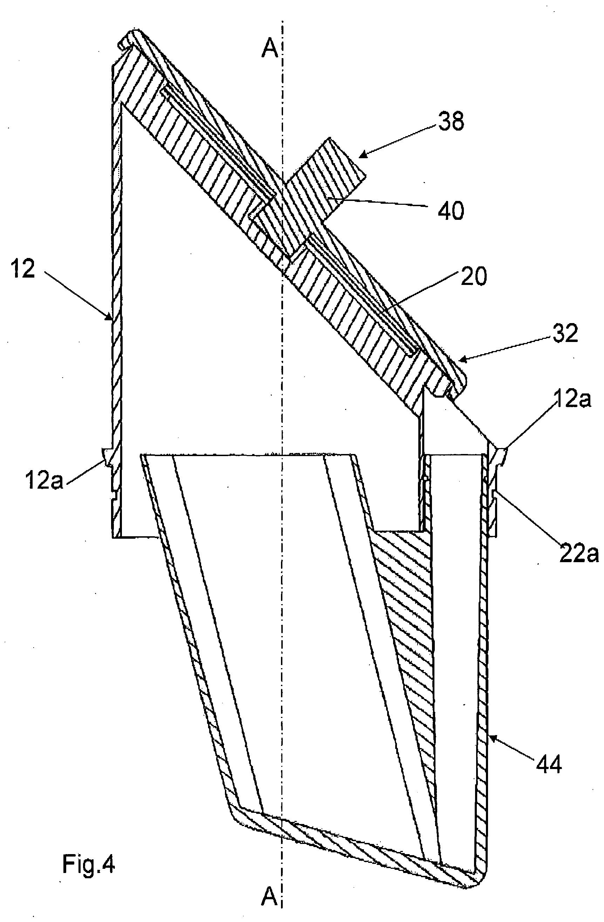

- Figure 4 schematically represents a view of a median and longitudinal section of the valve of figure 1;
- Figure 5 schematically represents an elevated side view of the valve of figure 2, mounted in a vertical exhaust duct of flue gases, represented by a dashed line;
- Figure 6 schematically represents an elevated side view of the valve of figure 2, without the siphon and mounted on a substantially horizontal exhaust duct of flue gases, represented by a dashed line;

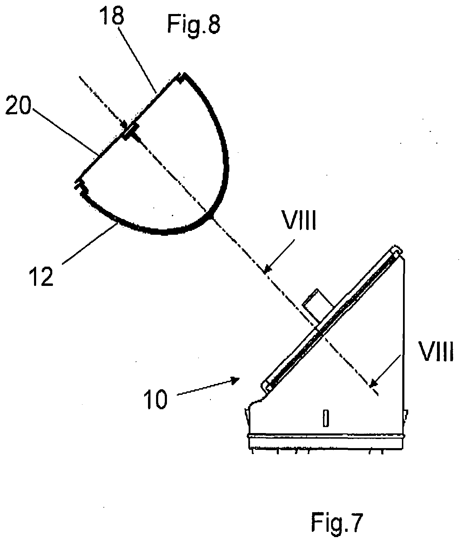

- Figure 7 schematically represents an elevated side view of the valve of figure 1, without the siphon;
- Figure 8 schematically represents a cross sectional view of the valve of figure 7, taken according to the plane having trace VIII-VIII of figure 7;

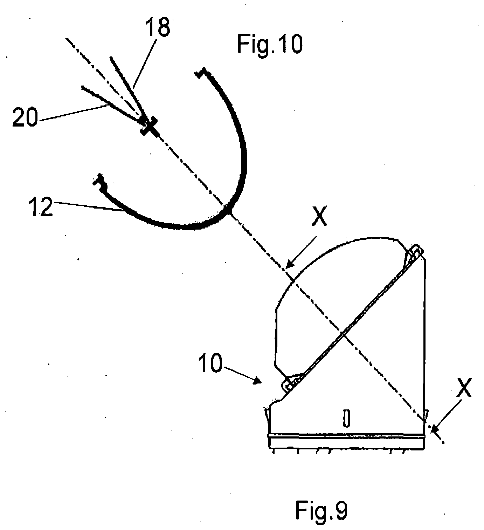

- Figure 9 schematically represents an elevated side view of the valve of figure 2, without the siphon;
- Figure 10 schematically represents a cross sectional view of the valve of figure 9, taken according to the plane having trace X - X of figure 10.

Referring to the figures, it is shown a non-return valve, according to the present invention and globally indicated with 10, for a exhaust duct 11 of flue gases of a boiler (not represented).

The valve 10 comprises a valve body 12 in which a passage opening 14 of flue gases is defined.

To the valve body 12 a obturator 16 is associated which closes said opening 14, in a determined operating condition of valve closing.

According to the present invention, the obturator 16 comprises a first and a second swing element (18, 20), hinged on the valve body 12 in proximity to (or at) a middle plane of the passage opening 14 of flue gases.

In particular, the valve body 12 has substantially tubular shape and it is adapted to be placed in the exhaust duct of flue gases of the boiler. Furthermore, the valve body 12 externally has a circumferential seat 22a for the housing of a circumferential gasket 22, intended to provide a seal against an internal wall of the exhaust duct 11 of flue gases.

The valve body 12 externally has also a plurality of radially projecting elements 12a, for example four, preferably arranged equally spaced from each other in a circumference , for a proper centring inside the exhaust duct 11. Furthermore, the valve body 12 comprises a longitudinal external groove 12b, for the housing of a corresponding internal relief of the duct 11, in order to ensure a proper orientation of the valve 10 with respect to the duct 11. Alternatively, the relief can be provided on the valve and the groove on the duct.

The opening 14 comprises two structurally distinct passage zones (14a, 14b) of flue gases, on which the first and the second swing element, 18 and 20, respectively, is active.

Furthermore, the two zones 14a and 14b are substantially coplanar and they are symmetric with respect to the abovementioned middle plane of the opening 14. In other embodiments of the invention, the two passage zones of flue gases are defined on two incident planes, whose angle of incidence, measured downstream of the valve, may be smaller or greater than 180°.

The plane to which the two zones 14a and 14b substantially belong is inclined of about 45° with respect to a longitudinal axis A of the valve body 12. Also embodiments in which the angle of the abovementioned inclination is comprised between 30° and 60° are advantageous.

The two zones 14a and 14b of the example illustrated in the figures have the same shape and size, in particular they have substantially semi-elliptical shape, comprising a portion of rectilinear edge, 24a and 24b, and a portion of curvilinear edge, 26a and 26b, which follows a substantially semi-elliptical profile. The portions of rectilinear edge 24a and 24b are parallel to each other.

Also the two swing elements 18 and 20 are preferably of the same shape and size, in particular they have substantially semi-elliptical shape corresponding to the one of the two zones 14a and 14b, comprising a portion of rectilinear edge, 28a and 28b, and a portion of curvilinear edge, 30a and 30b, which follows a substantially semi-elliptical profile.

The portions of rectilinear edge 28a and 28b are parallel to each other and they are hinged to said valve body 12. The portions of rectilinear edge 28a and 28b are hinged at the opposite ends (29a, 29b and 29c, 29d respectively)

According to the invention, the abovementioned ends 29a, 29b, 29c and 29d comprise respective pins projecting from the abovementioned portions of rectilinear edge 28a and 28b, substantially in the same direction of the portions of rectilinear edge, which are housed in respective seats on the valve body 12. The abovementioned respective seats are defined between respective cavities of the valve body 12 and a covering element 32 which is fixed over the valve body 12, at a central portion 34 of the valve body 12 substantially positioned between the two zones 14a and 14b, i.e. between the portions of rectilinear edge 24a and 24b.

Preferably, the hinging of the two swing elements 18 and 20 on the valve body 12 is with clearance, hence a great dimensional accuracy is not required for the abovementioned pins, which can also have non-circular section (for example they can have substantially square section, therefore the swing elements 18 and 20 can be made even through simple punching). In particular, the abovementioned clearance is in a parallel plane with respect to, or coincident with, the one of the two zones 14a and 14b. For example, the abovementioned clearance is in the direction of the portions of rectilinear edge 28a and 28b.

Preferably, in proximity to the hinges between the valve body 12 and the swing elements 18 and 20, the valve body 12 comprises projecting protection elements 31, which reduce the possibility of entry of soot and dirt in general in the hinges themselves.

Preferably, the zones 14a and 14b comprise a raised abutment edge, 36a and 36b, for the two swing elements 18 and 20, which is developed along the entire respective perimeter of the zones 14a and 14b.

Additionally, the valve body 12 comprises stop means 38 of the two swing elements 18 and 20, where the two swing elements 18 and 20 go in abutment in the operating condition of maximum opening of the valve 10.

In the illustrated example, the stop means 38 comprise a single element 40, arranged astride the two zones 14a and 14b, in particular between the portions of rectilinear edge 24a and 24b, in a substantially central position. The abovementioned element 40 has, in a plane orthogonal with respect to the directions of the portions of rectilinear edge 24a and 24b, a T-shaped section.

In the illustrated example, in order to facilitate the assembly of the valve 10, the abovementioned element 40 is integral to the covering element 32 and it is partially inserted into a slot 34a of the central portion 34.

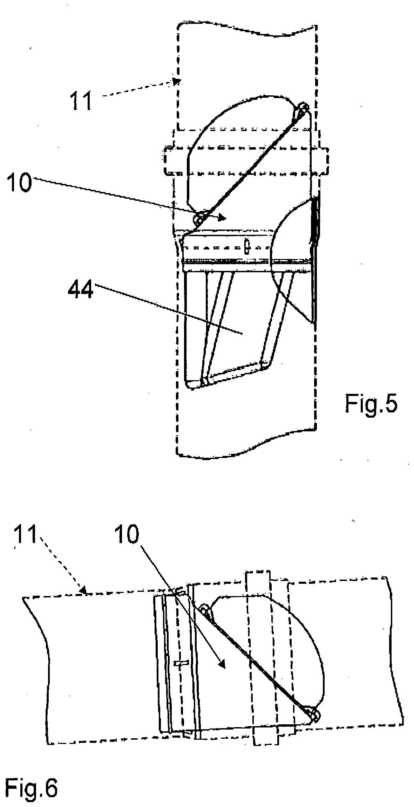

Furthermore, the valve body 12 comprises a condensate drainage opening 42. When the valve 10 is mounted in such a manner that the longitudinal axis A is arranged in vertical (figure 5), such opening 42 is arranged below with respect to the two zones 14a and 14b.

The opening 42 is connected to a siphon 44, where the condensate is collected. The siphon 44 also prevents the flue gases in the tract of exhaust duct of flue gases positioned downstream of the valve 10 from flowing back, through the opening 42 itself, into the tract of exhaust duct of flue gases positioned upstream of the valve 10.

Preferably, the siphon 44 has a smaller external size with respect to the one of the valve body 12. Additionally, even more preferably, an upper part of the siphon 44 is housed in the valve body 12.

The present invention also refers to the assembly of non-return valve, comprising the valve 10 described above and the siphon 44.

In the case (figure 6) where the valve 10 is mounted in such a manner that the longitudinal axis A is arranged substantially in horizontal (for example in the horizontal exhaust ducts of flue gases of a plurality of boilers, arranged in cascade one over the other, in a civil building), the opening 42, which is arranged superiorly with respect to the two zones 14a and 14b, is closed with a plug, after having disconnected the siphon 44.

Preferably, the valve body 12, the swing elements 18 and 20, and the siphon 44 are made of plastic material. In another embodiment, the swing elements 18 and 20 can be made of aluminium.

Of course, a man skilled in the art can bring numerous modifications and variants to the non-return valve and the assembly of non-return valve described above, in order to satisfy specific and contingent requirements, all of which are however covered by the scope of protection of the present invention as defined by the following claims.

## Claims

1. Non-return valve (10) for a exhaust duct (11) of flue gases of a boiler, comprising a valve body (12) in which a passage opening (14) of flue gases is defined, to said valve body (12) a obturator (16) being associated which, in a determined operating condition, closes such opening (14), said obturator (16) comprising a first swing element (18), hinged on said valve body (12) at said passage opening (14) of flue gases, and a second swing element (20), hinged on said valve body (12) at said passage opening (14) of flue gases, said first and second swing elements (18, 20) being hinged at or in proximity to a middle plane of said opening (14), wherein said passage opening (14) of flue gases comprises two passage zones (14a, 14b) of flue gases, each swing element (18, 20) being active on a respective zone (14a, 14b) of said passage zones of flue gases, said two swing elements (18, 20) comprising a portion of rectilinear edge (28a, 28b) which are parallel to each other and a portion of curvilinear edge (30a, 30b) which follows a substantially semi-elliptical profile, **characterised in that** said two passage zones (14a, 14b) are structurally distinct and **in that** the portions of rectilinear edge (28a, 28b) are hinged to said valve body (12) at their opposite ends (29a, 29b, 29c, 29d) which comprise respective pins projecting from the portions of rectilinear edge (28a, 28b), substantially in the same direction of the portions of rectilinear edge (28a, 28b), which pins are housed in respective seats on the valve body (12), wherein said seats are defined between respective cavities of the valve body (12) and a covering element (32) which is fixed over the valve body (12), at a central portion (34) of the valve body (12) substantially positioned between the two passage zones (14a, 14b).

2. Valve (10) according to claim 1, wherein said two zones (14a, 14b) are substantially coplanar.

3. Valve (10) according to claim 1 or 2, wherein said two zones (14a, 14b) are of the same shape and size and they are symmetric with respect to said middle plane.

4. Valve (10) according to claim 3, wherein said two swing elements (18, 20) are of the same shape and size.

5. Valve (10) according to any one of claims 2 to 4, wherein the plane to which said two zones (14a, 14b) substantially belong is inclined with respect to a longitudinal axis (A) of said valve body (12).

6. Valve (10) according to any one of the preceding claims, wherein said passage opening (14) of flue gases is substantially defined in a plane which is inclined with respect to a longitudinal axis (A) of said valve body (12).

7. Valve (10) according to claim 5 or 6, wherein said plane is inclined, with respect to said axis (A), of an angle comprised between 30° and 60°.

8. Valve (10) according to claim 7, wherein said plane is inclined of about 45° with respect to said axis (A).

9. Valve (10) according to any one of the preceding claims, wherein said two swing elements (18, 20) are hinged to said valve body (12) with clearance.

10. Valve (10) according to claim 9, when dependent on claim 2, wherein said clearance is in a parallel plane with respect to, or coincident with, the one of said two zones (14a, 14b).

11. Valve (10) according to any one of the preceding claims, wherein said opening (14) comprises at least one raised abutment edge (36a, 36b) for said two swing elements (18, 20), where said two swing elements (18, 20) rest in said determined operating closing condition of said valve (10) .

12. Valve (10) according to any one of the preceding claims, wherein said valve body (12) comprises stop means (38) of said two swing elements (18, 20), where said two swing elements (18, 20) go in abutment in a operating condition of maximum opening of said valve (10).

13. Valve (10) according to claim 12, when dependent on claim 2, comprising two hinges, one for each swing element (18, 20), and wherein said two hinges are positioned side by side and said stop means (38) comprise a single element (40) arranged astride said two hinges.

14. Valve (10) according to any one of the preceding claims, wherein said valve body (12) has substantially tubular shape.

15. Valve (10) according to claim 14, comprising at least one circumferential gasket (22) externally associated to said valve body (12) and intended to provide seal with an internal wall of said duct (11).

16. Valve (10) according to claim 15 or 16, wherein said valve body (12) externally has a plurality of centring elements (12a), radially projecting from said valve body (12) .

17. Valve (10) according to any one of the preceding claims, wherein said valve body (12) and said two swing elements (18, 20) are made of plastic material.

18. Valve (10) according to any one of the preceding claims, wherein said valve body (12) comprises at least one condensate drainage opening (42).

19. Valve (10) according to claim 18, when dependent on claim 5 or 6, wherein said at least one condensate drainage opening (42) is arranged below with respect to said passage opening (14) of flue gases when the valve (10) is mounted in such a manner that said longitudinal axis (A) is arranged in vertical.

20. Assembly of non-return valve (10) for a exhaust duct (11) of flue gases of a boiler, comprising a non-return valve (10) according to claim 18 or 19, and at least one siphon (44) connected to said at least one condensate drainage opening (42).

21. Assembly of valve according to claim 20, wherein said at least one siphon (44) has smaller external size with respect to the one of said valve body (12).

22. Assembly of valve according to claim 21, wherein said at least one siphon (44) is at least partially housed in said valve body (12).

23. Assembly of valve according to any one of claims 20 to 22, wherein said at least one siphon (44) is made of plastic material.

## Patentansprüche

1. Rückschlagventil (10) für einen Abgaskanal (11) von Rauchgasen eines Kessels, umfassend einen Ventilkörper (12), in dem eine Durchlassöffnung (14) von Rauchgasen definiert ist, wobei dem Ventilkörper (12) ein Absperrorgan (16) zugeordnet ist, welches in einem bestimmten operativen Zustand eine derartige Öffnung (14) verschließt, wobei das Absperrorgan (16) ein erstes Schwingelement (18) umfasst, das an dem Ventilkörper (12) an der Durchlassöffnung (14) von Rauchgasen angelenkt ist, und ein zweites Schwingelement (20), das an dem Ventilkörper (12) an der Durchlassöffnung (14) von Rauchgasen angelenkt ist, wobei die ersten und zweiten Schwingelemente (18, 20) an oder in der Nähe einer mittleren Ebene der Öffnung (14) angelenkt sind, wobei die Durchlassöffnung (14) von Rauchgasen zwei Durchlasszonen (14a, 14b) von Rauchgasen umfasst, wobei jedes Schwingelement (18, 20) auf eine jeweilige Zone (14a, 14b) der Durchlasszonen von Rauchgasen wirkt, wobei die beiden Schwingelemente (18, 20) einen Abschnitt mit geradlinigem Rand (28a, 28b) umfassen, die zueinander parallel sind, und einen Abschnitt mit gekrümmten Rand (30a, 30b), der einem im Wesentlichen halbelliptischen Profil folgt, **dadurch gekennzeichnet, dass** die beiden Durchlasszonen (14a, 14b) strukturell unterschiedlich sind und dass die Abschnitte mit geradlinigem Rand (28a, 28b) an dem Ventilkörper (12) an deren gegenüberliegenden Enden (29a, 29b, 29c, 29d) angelenkt sind, die jeweilige Stifte umfassen, die aus den Abschnitten mit geradlinigem Rand (28a, 28b) im Wesentlichen in die gleiche Richtung wie die Abschnitte mit geradlinigem Rand (28a, 28b) auskragen, welche Stifte in jeweiligen Sitzen auf dem Ventilkörper (12) untergebracht sind, wobei die Sitze zwischen jeweiligen Hohlräumen des Ventilkörpers (12) und einem Abdeckelement (32) definiert sind, das über dem Ventilkörper (12) in einem zentralen Abschnitt (34) des Ventilkörpers (12) befestigt ist, der im Wesentlichen zwischen den beiden Durchlasszonen (14a, 14b) angeordnet ist.

2. Ventil (10) nach Anspruch 1, wobei die beiden Zonen (14a, 14b) im Wesentlichen koplanar sind.

3. Ventil (10) nach Anspruch 1 oder 2, wobei die beiden Zonen (14a, 14b) dieselbe Form und Größe aufweisen und symmetrisch in Bezug auf die mittlere Ebene sind.

4. Ventil (10) nach Anspruch 3, wobei die beiden Schwingelemente (18, 20) dieselbe Form und Größe aufweisen.

5. Ventil (10) nach einem der Ansprüche 2 bis 4, wobei die Ebene, der die beiden Zonen (14a, 14b) im Wesentlichen angehören, in Bezug auf eine Längsachse (A) des Ventilkörpers (12) geneigt ist.

6. Ventil (10) nach einem der vorstehenden Ansprüche, wobei die Durchlassöffnung (14) von Rauchgasen im Wesentlichen auf eine Ebene definiert ist, die in Bezug auf eine Längsachse (A) des Ventilkörpers (12) geneigt ist.

7. Ventil (10) nach Anspruch 5 oder 6, wobei die Ebene in einem Winkel zwischen 30° und 60° in Bezug auf die Achse (A) geneigt ist.

8. Ventil (10) nach Anspruch 7, wobei die Ebene in Bezug auf die Achse (A) um ungefähr 45° geneigt ist.

9. Ventil (10) nach einem der vorstehenden Ansprüche, wobei die beiden Schwingelemente (18, 20) mit Spiel an dem Ventilkörper (12) angelenkt sind.

10. Ventil (10) nach Anspruch 9, sofern abhängig von Anspruch 2, wobei das Spiel auf einer parallelen Ebene in Bezug auf oder koinzident mit der einen der beiden Zonen (14a, 14b) liegt.

11. Ventil (10) nach einem der vorstehenden Ansprüche, wobei die Öffnung (14) wenigstens einen erhöhten Anschlagrand (36a, 36b) für die beiden Schwingelemente (18, 20) umfasst, wobei die beiden Schwingelemente (18, 20) in dem festgelegten operativen Schließzustand des Ventils (10) bleiben.

12. Ventil (10) nach einem der vorstehenden Ansprüche, wobei der Ventilkörper (12) Stoppmittel (38) für die beiden Schwingelemente (18, 20) umfasst, wobei die beiden Schwingelemente (18, 20) in einem operativen Zustand von maximaler Öffnung des Ventils (10) in Anschlag gehen.

13. Ventil (10) nach Anspruch 12, sofern abhängig von Anspruch 2, umfassend zwei Scharniere, eines für jedes Schwingelement (18, 20) und wobei die beiden Scharniere nebeneinander angeordnet sind und die Stoppmittel (38) ein einzelnes Element (40) umfassen, das rittlings über den beiden Scharnieren angeordnet ist.

14. Ventil (10) nach einem der vorstehenden Ansprüche, wobei der Ventilkörper (12) im Wesentlichen rohrförmig ist.

15. Ventil (10) nach Anspruch 14, umfassend wenigstens eine umlaufende Dichtung (22), die dem Ventilkörper (12) außenseitig zugeordnet und dazu bestimmt ist, abdichtend gegenüber einer Innenwand des Kanals (11) zu wirken.

16. Ventil (10) nach Anspruch 15 oder 16, wobei der Ventilkörper (12) außenseitig eine Mehrzahl von zentrierenden Elementen (12a) aufweist, die radial aus dem Ventilkörpers (12) hervorstehen.

17. Ventil (10) nach einem der vorstehenden Ansprüche, wobei der Ventilkörper (12) und die zwei Schwingelemente (18, 20) aus Kunststoffmaterial hergestellt sind.

18. Ventil (10) nach einem beliebigen der vorstehenden Ansprüche, wobei der Ventilkörper (12) wenigstens eine Kondensatablauföffnung (42) umfasst.

19. Ventil (10) nach Anspruch 18, sofern abhängig von Anspruch 5 oder 6, wobei die wenigstens eine Kondensatablauföffnung (42) unterhalb der Durchlassöffnung (14) von Rauchgasen angeordnet ist, wenn das Ventil (10) derart eingebaut ist, dass die Längsachse (A) vertikal angeordnet ist.

20. Rückschlagventil-Gruppe (10) für einen Abgaskanal (11) von Rauchgasen eines Kessels, umfassend ein Rückschlagventil (10) nach Anspruch 18 oder 19 und wenigstens einen Siphon (44), der mit der wenigstens einen Kondensatablauföffnung (42) verbunden ist.

21. Ventilgruppe nach Anspruch 20, wobei der wenigstens eine Siphon (44) kleinere Außenmaße als der Ventilkörper (12) aufweist.

22. Ventilgruppe nach Anspruch 21, wobei der wenigstens eine Siphon (44) wenigstens teilweise in dem Ventilkörper (12) untergebracht ist.

23. Ventilgruppe nach einem der Ansprüche 20 bis 22, wobei der wenigstens eine Siphon (44) aus Kunststoffmaterial hergestellt ist.

## Revendications

1. Soupape de non retour (10) pour un conduit d'échappement (11) de fumées de chaudière, comprenant un corps de soupape (12) dans lequel une ouverture de passage (14) de gaz de combustion est définie, un obturateur (16) étant associé audit corps de soupape (12), lequel, dans une condition de fonctionnement déterminée, ferme ladite ouverture (14), ledit obturateur (16) comprenant un premier élément basculant (18), articulé sur ledit corps de soupape (12) au niveau de ladite ouverture de passage (14) de gaz de combustion, et un deuxième élément basculant (20), articulé sur ledit corps de soupape (12) au niveau de ladite ouverture de passage (14) de gaz de combustion, lesdits premier et deuxième éléments basculants (18, 20) étant articulés au niveau ou à proximité d'un plan médian de ladite ouverture (14), dans laquelle ladite ouverture de passage (14) de gaz de combustion comprend deux zones de passage (14a, 14b) de gaz de combustion, chaque élément basculant (18, 20) étant actif sur une zone respective (14a, 14b) desdites zones de passage de gaz de combustion, lesdits deux éléments basculants (18, 20) comprenant une portion de bord rectiligne (28a, 28b), qui sont parallèles entre eux et une portion de bord curviligne (30a, 30b) qui suit un profil sensiblement semi-elliptique, **caractérisée en ce que** lesdites deux zones de passage (14a, 14b) sont structurellement distinctes et **en ce que** les portions de bord rectiligne (28a, 28b) sont articulées audit corps de soupape (12) à leurs extrémités opposées (29a, 29b, 29c, 29d) qui comprennent des pivots respectifs faisant saillie par rapport aux portions de bord rectiligne (28a, 28b), sensiblement dans la même direction des portions de bord rectiligne (28a, 28b), lesquels pivots sont logés dans des sièges respectifs sur le corps de soupape (12), dans lequel lesdits sièges sont définis entre des cavités respectives du corps de soupape (12) et un élément de couverture (32) qui est fixé sur le corps de soupape (12), au niveau d'une portion centrale (34) du corps de soupape (12) sensiblement positionnée entre les deux zones de passage (14a, 14b).

2. Soupape (10) selon la revendication 1, dans laquelle lesdites deux zones (14a, 14b) sont sensiblement coplanaires.

3. Soupape (10) selon la revendication 1 ou 2, dans laquelle lesdites deux zones (14a, 14b) sont de la même forme et dimension et elles sont symétriques par rapport audit plan médian.

4. Soupape (10) selon la revendication 3, dans laquelle lesdits deux éléments basculants (18, 20) sont de la même forme et dimension.

5. Soupape (10) selon l'une quelconque des revendications 2 à 4, dans laquelle le plan auquel lesdites deux zones (14a, 14b) appartiennent sensiblement est incliné par rapport à un axe longitudinal (A) dudit corps de soupape (12).

6. Soupape (10) selon l'une quelconque des revendications précédentes, dans laquelle ladite ouverture de passage (14) de gaz de combustion est sensiblement définie dans un plan qui est incliné par rapport à un axe longitudinal (A) dudit corps de soupape (12).

7. Soupape (10) selon la revendication 5 ou 6, dans laquelle ledit plan est incliné, par rapport audit axe (A), d'un angle compris entre 30° et 60°.

8. Soupape (10) selon la revendication 7, dans laquelle ledit plan est incliné d'environ 45° par rapport audit axe (A).

9. Soupape (10) selon l'une quelconque des revendications précédentes, dans laquelle lesdits deux éléments basculants (18, 20) sont articulés sur ledit corps de soupape (12) avec un jeu.

10. Soupape (10) selon la revendication 9, quand elle dépend de la revendication 2, dans laquelle ledit jeu est dans un plan parallèle par rapport à, ou coïncident avec, l'une desdites deux zones (14a, 14b).

11. Soupape (10) selon l'une quelconque des revendications précédentes, dans laquelle ladite ouverture (14) comprend au moins un bord surélevé de butée (36a, 36b) pour lesdits deux éléments basculants (18, 20), dans lequel lesdits deux éléments basculants (18, 20) se trouvent dans ladite condition de fermeture de fonctionnement déterminée de ladite soupape (10).

12. Soupape (10) selon l'une quelconque des revendications précédentes, dans laquelle ledit corps de soupape (12) comprend des moyens d'arrêt (38) desdites deux éléments basculants (18, 20), dans laquelle lesdits deux éléments basculants (18, 20) viennent en butée dans une condition de fonctionnement d'ouverture maximale de ladite soupape (10).

13. Soupape (10) selon la revendication 12, quand elle dépend de la revendication 2, comprenant deux articulations, une pour chaque élément basculant (18, 20), et dans laquelle lesdites deux articulations sont positionnées côte à côte et lesdits moyens d'arrêt (38) comprennent un unique élément (40) agencé à cheval sur lesdites deux articulations.

14. Soupape (10) selon l'une quelconque des revendications précédentes, dans laquelle ledit corps de soupape (12) a une forme sensiblement tubulaire.

15. Soupape (10) selon la revendication 14, comprenant au moins une garniture circonférentielle (22) associée extérieurement audit corps de soupape (12) et destinée à fournir une étanchéité avec une paroi interne dudit conduit (11).

16. Soupape (10) selon la revendication 15 or 16, dans laquelle ledit corps de soupape (12) comporte extérieurement une pluralité d'éléments de centrage (12a), faisant saillie radialement à partir dudit corps de soupape (12) .

17. Soupape (10) selon l'une quelconque des revendications précédentes, dans laquelle ledit corps de soupape (12) et lesdits deux éléments basculants (18, 20) sont réalisés en matériau plastique.

18. Soupape (10) selon l'une quelconque des revendications précédentes, dans laquelle ledit corps de soupape (12) comprend au moins une ouverture d'évacuation de condensat (42).

19. Soupape (10) selon la revendication 18, quand elle dépend de la revendication 5 ou 6, dans laquelle ladite au moins une ouverture d'évacuation de condensat (42) est agencée au-dessous par rapport à ladite ouverture de passage (14) de gaz de combustion quand la soupape (10) est montée de telle manière que ledit axe longitudinal (A) soit disposé verticalement.

20. Ensemble de soupape de non retour (10) pour un conduit d'échappement (11) de fumées de chaudière, comprenant une soupape de non retour (10) selon la revendication 18 ou 19, et au moins un siphon (44) connecté à ladite au moins une ouverture d'évacuation de condensat (42) .

21. Ensemble de soupape selon la revendication 20, dans laquelle ledit au moins un siphon (44) a une taille extérieure inférieure par rapport à celle dudit corps de soupape (12).

22. Ensemble de soupape selon la revendication 21, dans laquelle ledit au moins un siphon (44) est logé au moins en partie dans ledit corps de soupape (12).

23. Ensemble de soupape selon l'une quelconque des revendications 20 à 22, dans laquelle ledit au moins un siphon (44) est réalisé en matériau plastique.
